# EUROPÄISCHE PATENTSCHRIFT

(11) **EP 0 329 935 B1**
(45) Veröffentlichungstag und Bekanntmachung des Hinweises auf die Patenterteilung: **08.09.1993**
(21) Anmeldenummer: 89100556.3
(22) Anmeldetag: 13.01.1989
(51) Int. Cl.: G02B 6/44

(54) **Anordnung und Verfahren zum Bevorraten optischer Adern**
Method and device for storing optical fibres
Méthode et appareil pour le stockage de fibres optiques

(30) Priorität: 26.02.1988 DE 3806136
(43) Veröffentlichungstag der Anmeldung: 30.08.1989
(73) Patentinhaber: KABEL RHEYDT Aktiengesellschaft, D-41179 Mönchengladbach (DE)
(72) Erfinder: Zamzow, Peter, Dipl.-Ing., D-4630 Bochum (DE); Lindlar, Rolf, Dipl.-Ing., D-4052 Korschenbroich 4 (DE); Böhme, Rolf, Dipl.-Ing., D-5650 Solingen 11 (DE); Korporal, Hans Werner, D-4100 Duisburg 1 (DE)
(74) Vertreter: Mende, Eberhard, Dipl.-Ing.

(56) Entgegenhaltungen:
- EP-A- 0 101 970
- FR-A- 2 515 466
- FR-A- 2 570 196
- US-A- 4 595 255

## Beschreibung

Die Erfindung bezieht sich auf ein Gerät der optischen Nachrichtentechnik zum Bevorraten von Überlängen von optischen Adern, bestehend aus einem Schrank mit einer Rückwand und mindestens einem Einschub mit einer vorderen Wand und einem hinteren Ende, der in eine Öffnung des Schrankes eingesetzt und um eine bestimmte Auszugsstrecke aus diesem herausziehbar ist und der aus einer ersten, rechteckigen Kammer zur Aufnahme von mindestens einer optischen Ader sowie aus einer von der ersten durch eine Trennwand getrennten zweiten, rechteckigen Kammer zur Aufnahme eines Vorrats von mindestens einer in Schleifen gelegten optischen Ader besteht (FR-A-2 515 466).

"Gerät" im Sinne der Erfindung ist beispielsweise ein Gestell für Kabelendgeräte, in dem Einschübe direkt oder unter Zwischenschaltung von Baugruppenträgern angeordnet sind. Derartige Gestelle mit Baugruppenträgern und Einschüben können beispielweise in der bekannten 19''-Bauform aufgebaut sein. In der Kabelendgerätetechnik für Lichtwellenleiter und in der opto-elektronischen Anschlußtechnik werden beispielsweise modular kombinierbare Glasfaser-Kabelendgeräteeinschübe und Normspleißkassetten verwendet.

Es sind Geräte bekannt, bei denen einzelne optische Adern oder Aderbündel in einem Strang mit Überlänge verlegt und in gewisser Weise frei beweglich sind. Durch die Überlänge kann der Einschub, an dem die Adern bzw. Aderbündel befestigt sind, aus dem Gerät herausgezogen werden. Solange das Gerät, das zur Aufnahme von Elektronikeinschüben und von Einschüben für die opto-elektronische Verbindungstechnik ausgerüstet ist, genügend Freiraum für die Bewegung der Adern bzw. Aderbündel läßt, ist es möglich, daß die Adern bzw. Aderbündel beim Herausziehen der Einschübe nicht beschädigt werden. Bei größerer Packungsdichte der Einschübe besteht jedoch die Gefahr, daß sich die jeweiligen Adern bzw. Aderbündel gegenseitig behindern. Beim Herausziehen eines Einschubs oder mehrerer Einschübe kann es außerdem geschehen, daß der zulässige Krümmungsradius unterschritten wird, so daß die in den Adern bzw. Aderbündeln enthaltenen Glasfasern brechen.

Aus der eingangs erwähnten FR-A-2 515 466 geht ein Gestell der optischen Nachrichtentechnik hervor, bei dem eine Vielzahl von Einschüben in Baugruppenträgern angeordnet ist. In den Einschüben sind Glasfasern von ankommenden optischen Kabeln einerseits und zu elektrischen bzw. elektronischen Einrichtungen führende Glasfasern andererseits in Schleifen angeordnet. In jedem Einschub werden zwei derartige Glasfasern über einen Stecker miteinander verbunden, der außen an der Frontplatte des jeweiligen Einschubs angebracht ist. Eine der Glasfasern ist dabei über einen an der Frontplatte des Einschubs angebrachten bügelförmigen Griff geführt.

Der Erfindung liegt die Aufgabe zugrunde, das eingangs geschilderte Gerät so weiterzubilden, daß die optische Ader beim Herausziehen des Einschubs aus dem Gerät und beim Einschieben desselben in das Gerät nicht beschädigt wird und daS dieselbe bei herausgezogenem Einschub auf einfache Weise zum Spleißen und/oder Rangieren verfügbar ist.

Diese Aufgabe wird gemäß der Erfindung dadurch gelöst,
- daß an der Rückwand des Schranks erste Befestigungsmittel für die optische Ader vorgesehen sind,
- daß in der ersten Kammer an dem hinteren Ende des Einschubs eine in Bewegungsrichtung des Einschubs ausgerichtete Führungshülse zur reibungsarmen Durchführung der optischen Ader sowie zweite Befestigungsmittel für die optische Ader angebracht sind,
- daß die ersten Befestigungsmittel und die Führungshülse in einer derartigen Position relativ zueinander angebracht sind, daß die an den ersten Befestigungsmitteln fixierte Ader ohne Knick durch die Führungshülse in die erste Kammer des Einschubs geführt werden kann,
- daß der Abstand zwischen vorderer Wand des Einschubs und Führungshülse bzw. zweiten Befestigungsmitteln sowie die Position der zweiten Befestigungsmittel so gewählt sind, daß eine optische Ader, deren Länge zwischen Führungshülse und zweiten Befestigungsmitteln bei eingeschobenem Einschub größer als die doppelte Auszugsstrecke ist, als Schleife in Form eines U, dessen Schenkel durch die Führungshülse bzw. die zweiten Befestigungsmittel festgelegt werden können, in die erste Kammer eingelegt werden kann,
- daß in der zweiten Kammer des Einschubs eine Spleißkassette und Raum zur Aufnahme des Vorrats der optischen Ader vorgesehen sind und
- daß in der Trennwand zwischen erster und zweiter Kammer eine Öffnung vorgesehen ist, durch welche die optische Ader in Form des in Schleifen gelegten Vorrats von den zweiten Befestigungsmitteln zur Spleißkassette geführt werden kann.

Durch die Führungshülse und die zweiten Befestigungsmittel ist sichergestellt, daß die optische Ader in der ersten Kammer des Einschubs bei dessen Bewegung nicht beschädigt, insbesondere nicht geknickt werden kann. Die optische Ader bildet zwischen Führungshülse und zweiten Befestigungsmitteln innerhalb der ersten Kammer des Einschubs in jeder Position desselben eine Schleife in Form eines U mit einem Krümmungsradius, der ein Knicken derselben verhindert. Der Krümmungsradius der optischen Ader in der ersten Kammer bleibt auch beim Bewegen des Einschubs ständig erhalten, da die Position der dabei auf der Ader gleitenden Führungshülse zu den zweiten Befestigungsmitteln nicht verändert wird. Durch die in der zweiten Kammer angeordnete Spleißkassette ist die optische Ader bei herausgezogenem Einschub zum Spleißen oder zum Rangieren zugänglich. Beides kann besonders einfach durchgeführt werden, wenn die Spleißkassette aus dem Einschub herausgenommen wird. Das ist ohne Beschädigungsgefahr für die optische Ader möglich, weil dieselbe in der zweiten Kammer in dem Vorrat in ausreichender Länge untergebracht ist.

Die Erfindung wird nachfolgend anhand der Zeichnungen näher erläutert.

Es zeigen:
Fig. 1 eine Ansicht eines als Schrank ausgeführten Geräts der Nachrichtentechnik.
Fig. 2 eine Seitenansicht eines für den Schrank verwendbaren Einschubs in Arbeitsposition.
Fig. 3 den Einschub nach Fig. 2 in einer anderen Position.
Fig. 4 eine perspektivische Ansicht des Einschubs.
Fig. 5 eine Ansicht eines Baugruppenträgers mit einem Einschub.

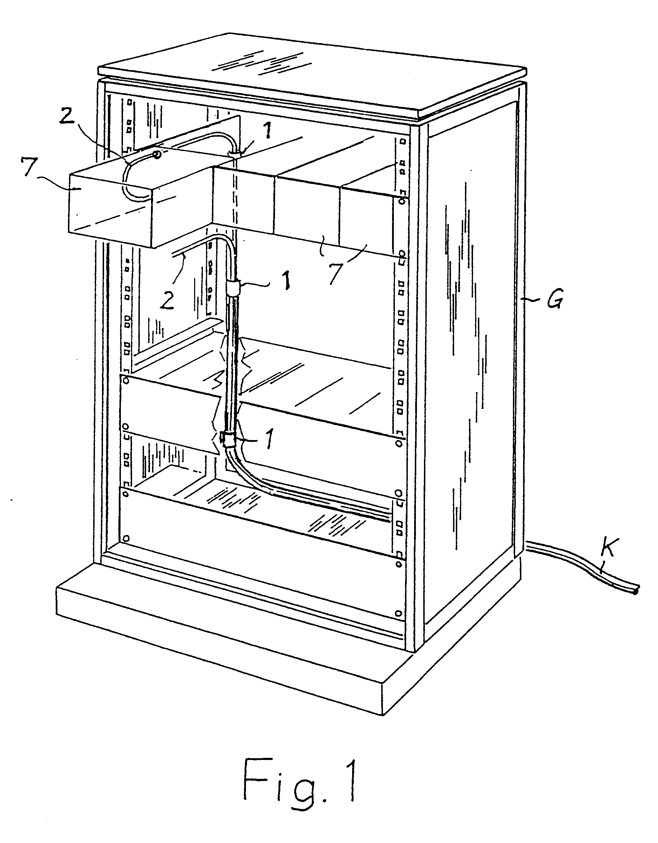

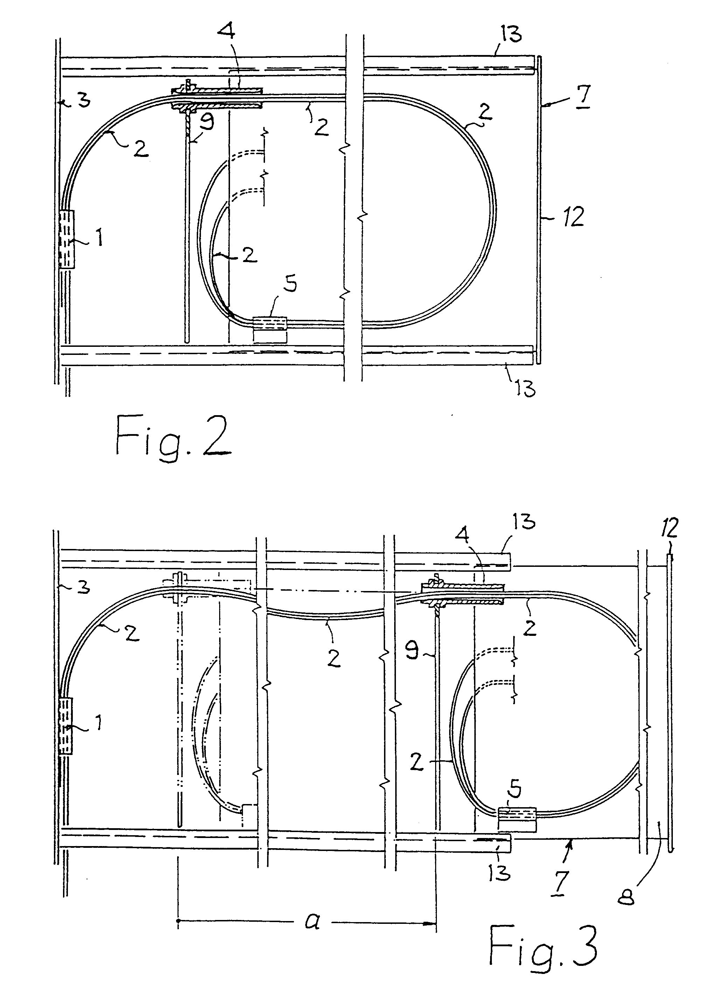

In Fig. 1 ist ein als Schrank G ausgeführtes Gerät der optischen Nachrichtentechnik dargestellt, in das ein optisches Kabel K eingeführt ist. Das Kabel K enthält einzelne Bündel optischer Adern 2. Es ist an der Rückwand 3 des Schranks G mittels dort angebrachter erster Befestigungsmittel 1 befestigt. Die optischen Adern 2 verlaufen an der Rückwand 3 des Schranks G in der dargestellten Weise vertikal. Sie zweigen in den entsprechenden Ebenen zu Einschüben 7 hin ab, von denen in Fig. 1 der Einfachheit halber nur eine Ebene dargestellt ist. Der genauere Aufbau der Einschübe 7 geht aus den Fig. 2 bis 4 hervor.

Fig. 2 zeigt eine Seitenansicht eines in den Schrank G eingeschobenen Einschubs 7. In dieser Position schließt die vordere Wand 12 des Einschubs 7 mit seiner Führung dienenden Führungsschienen 13 ab. Vom Schrank G sind nur die Rückwand 3 und Führungsschienen 13 dargestellt. Die optische Ader 2 tritt von einem ersten Befestigungsmittel 1 an der Rückwand 3 des Schranks G durch eine Führungshülse 4 des Einschubs 7 in eine erste Kammer 6 desselben ein. Die Führungshülse 4 ist an dem hinteren Ende 9 des Einschubs 7 angebracht. Sie ist gemäß Fig. 2 am oberen Rand bzw. an der oben liegenden Kante des Einschubs 7 positioniert. Nach Durchlaufen einer sich über die ganze Länge des Einschubs 7 erstreckenden, U-förmigen Schleife ist die optische Ader 2 mittels zweiter Befestigungsmittel 5 - im folgenden kurz "Festpunkt 5" genannt - am Einschub 7 festgelegt. Der Festpunkt 5 ist an der der Führungshülse 4 gegenüberliegenden Kante des Einschubs 7 am gleichen Ende desselben wie die Führungshülse 4 angebracht. Falls in einem Einschub 7 zwei oder mehr optische Adern 2 untergebracht sind, können dieselben durch einen Schlauch oder Kabelbinder zusammengefaßt werden, so daß sie stets parallel zueinander verlaufen. Der Festpunkt 5 besteht vorzugsweise aus einer Schlauchschelle, welche die optische Ader 2 nicht direkt festklemmt, sondern beispielsweise über einen Kunststoffschlauch derart Kraft auf dieselbe ausübt, daß sie zwar in der Richtung festgelegt ist, jedoch noch kleinere Bewegungen ausführen kann.

In Fig. 3 ist der Einschub 7 in aus dem Schrank G herausgezogener Position dargestellt. Er ist dabei gegenüber der Arbeitsposition nach Fig. 2 um die Strecke a in den Führungsschienen 13 bewegt worden. Um sicherzustellen, daß die Faser der optischen Ader 2 beim Herausziehen des Einschubs 7 aus dem Schrank G nicht bricht, muß die optische Ader 2 in der in Fig. 2 dargestellten Arbeitsposition des Einschubs 7 vom Festpunkt 5 bis zum Eintritt in die Führungshülse 4 eine Länge haben, die größer als die doppelte Strecke a ist, um die der Einschub 7 aus dem Schrank G herausgezogen werden kann. Die Länge der optischen Ader 2 zwischen Festpunkt 5 und Führungshülse 4 hat sich nach dem Herausziehen des Einschubs 7 zwar verkleinert, ihr Krümmungsradius ist jedoch immer noch so groß, daß keine Bruchgefahr besteht. Auch die optischen Verluste sind vernachlässigbar.

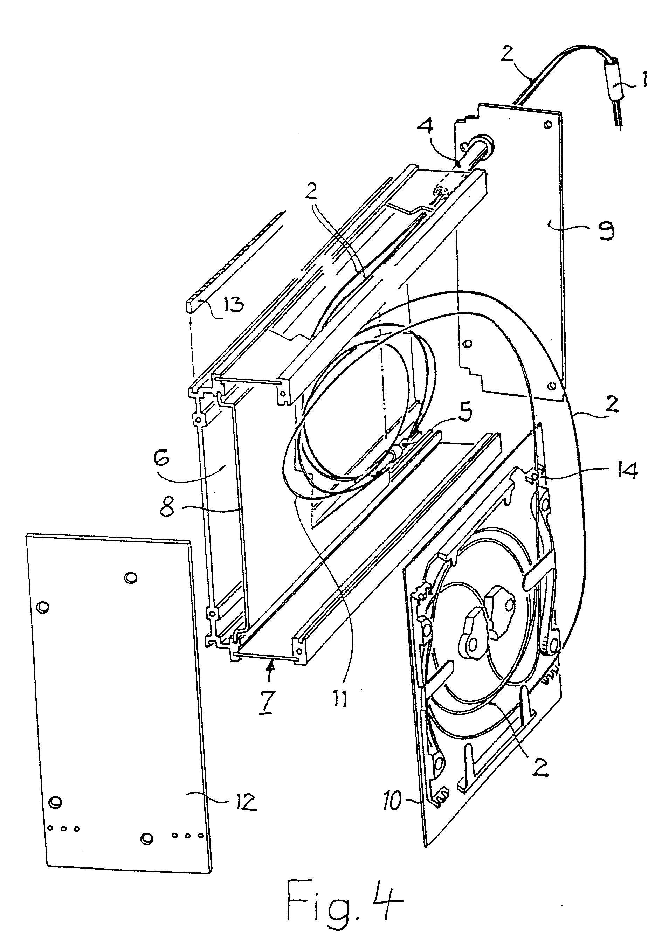

In Fig. 4 ist die Anordnung der optischen Ader 2 im Einschub 7 in Form einer Explosionszeichnung dargestellt. Die optische Ader 2 tritt aus der ersten Kammer 6 in eine zweite, durch eine Trennwand 8 von derselben getrennte Kammer ein. Sie ist in der zweiten Kammer zur Bildung eines Vorrats 11 als Schleife angeordnet. In der zweiten Kammer befindet sich außerdem eine herausnehmbare Spleißkassette 10. Die optische Ader 2 ist an der Stelle 14 in die Spleißkassette 10 eingeführt und in derselben üblicherweise in Schleifen gelegt. Sie kann zum Spleißen herausgenommen werden. Im herausgezogenen Zustand des Einschubs 7 kann die Spleißkassette 10 leicht aus der zweiten Kammer herausgenommen werden. Dies kann nötig sein, falls die optische Ader 2 rangiert werden soll. Dazu können zusätzliche Adern in die Spleißkassette 10 eingeführt werden. Es können aber auch Adern aus der Spleißkassette 10 herausgenommen und in andere Einschübe 7 des Schranks G eingeführt werden.

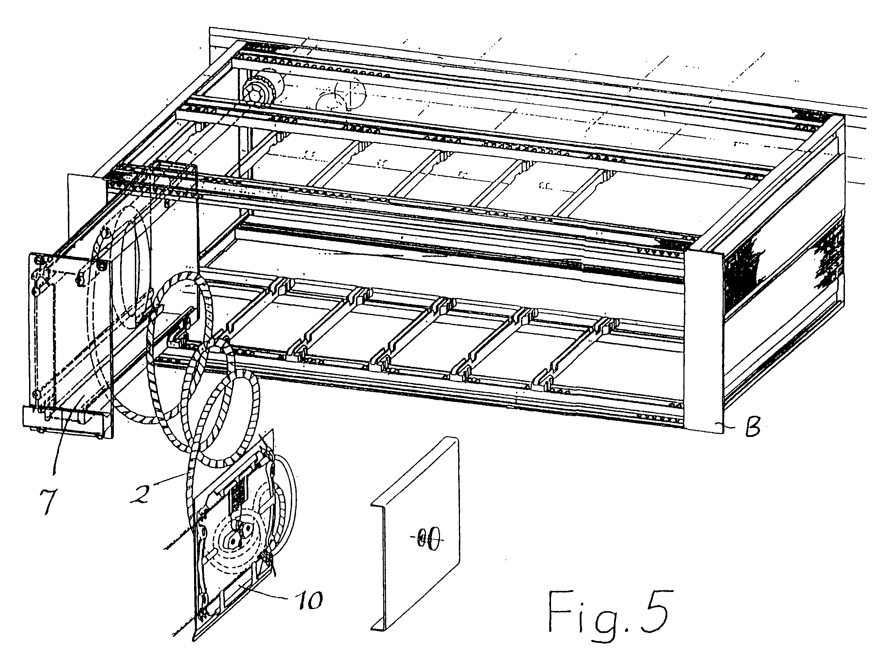

In Fig. 5 ist ein Baugruppenträger B dargestellt, der beispielsweise der in einer Ebene angeordneten Reihe von Einschüben 7 gemäß Fig. 1 entspricht. Es ist hier nur ein Einschub 7 mit einer Spleißkassette 10 eingezeichnet. Die Spleißkassette 10 ist unter Ausnutzung des Vorrats 11 der optischen Ader 2 aus dem Einschub 7 herausgenommen.

## Patentansprüche

1. Gerät der optischen Nachrichtentechnik zum Bevorraten von Überlängen von optischen Adern, bestehend aus einem Schrank (G) mit einer Rückwand (3) und mindestens einem Einschub (7) mit einer vorderen Wand (12) und einem hinteren Ende (9), der in eine Öffnung des Schrankes (G) eingesetzt und um eine bestimmte Auszugsstrecke (a) aus diesem herausziehbar ist und der aus einer ersten, rechteckigen Kammer (6) zur Aufnahme von mindestens einer optischen Ader (2) sowie aus einer von der ersten durch eine Trennwand (8) getrennten zweiten, rechteckigen Kammer zur Aufnahme eines Vorrats (11) von mindestens einer in Schleifen gelegten optischen Ader besteht, dadurch gekennzeichnet,
- daß an der Rückwand des Schranks (G) erste Befestigungsmittel (1) für die optische Ader (2) vorgesehen sind,
- daß in der ersten Kammer (6) an dem hinteren Ende (9) des Einschubs (7) eine in Bewegungsrichtung des Einschubs ausgerichtete Führungshülse (4) zur reibungsarmen Durchführung der optischen Ader (2) sowie zweite Befestigungsmittel (5) für die optische Ader angebracht sind,
- daß die ersten Befestigungsmittel (1) und die Führungshülse (4) in einer derartigen Position relativ zueinander angebracht sind, daß die an den ersten Befestigungsmitteln (1) fixierte Ader (2) ohne Knick durch die Führungshülse (4) in die erste Kammer (6) des Einschubs (7) geführt werden kann,
- daß der Abstand zwischen vorderer Wand (12) des Einschubs (7) und Führungshülse (4) bzw. zweiten Befestigungsmitteln (5) sowie die Position der zweiten Befestigungsmittel (5) so gewählt sind, daß eine optische Ader (2), deren Länge zwischen Führungshülse (4) und zweiten Befestigungsmitteln (5) bei eingeschobenem Einschub (7) größer als die doppelte Auszugsstrecke (a) ist, als Schleife in Form eines U, dessen Schenkel durch die Führungshülse (4) bzw. die zweiten Befestigungsmittel (5) festgelegt werden können, in die erste Kammer (6) eingelegt werden kann,
- daß in der zweiten Kammer des Einschubs (7) eine Spleißkassette (10) und Raum zur Aufnahme des Vorrats (11) der optischen Ader (2) vorgesehen sind und
- daß in der Trennwand (8) zwischen erster und zweiter Kammer eine Öffnung vorgesehen ist, durch welche die optische Ader (2) in Form des in Schleifen gelegten Vorrats (11) von den zweiten Befestigungsmitteln (5) zur Spleißkassette (10) geführt werden kann.

## Claims

1. Device in optical communications for storing excess lengths of optical fibres, consisting of a cabinet (G) having a backplane (3) and at least one slide-in unit (7), which has a front wall (12) and a rear end (9), is inserted into an opening in the cabinet (G), can be withdrawn from the latter by a specific withdrawal distance, and consists of a first, rectangular chamber (6) for accommodating at least one optical fibre (2) and of a second, rectangular chamber, separated from the first by a partition (8), for accommodating a store (11) of at least one optical fibre laid in loops, characterised
- in that first fixing means (1) for the optical fibre (2) are provided on the backplane of the cabinet (G),
- in that a guide sleeve (4), aligned in the direction of movement of the slide-in unit, for feeding through the optical fibre (2) with little friction and second fixing means (5) for the optical fibre are mounted in the first chamber (6) at the rear end (9) of the slide-in unit (7),
- in that the first fixing means (1) and the guide sleeve (4) are mounted in a position relative to one another in such a way that the fibre (2) fixed to the first fixing means (1) can be guided without a kink through the guide sleeve (4) into the first chamber (6) of the slide-in unit (7),
- in that the distance between the front wall (12) of the slide-in unit (7) and guide sleeve (4) or second mixing means (5), and the position of the second fixing means (5) are selected such that an optical fibre (2), whose length between the guide sleeve (4) and second fixing means (5) is greater with the slide-in unit slid in than twice the withdrawal distance (a), can be inserted into the first chamber (6) as a loop in the form of a U whose limbs can be specified by the guide sleeve (4) or the second fixing means (5),
- in that a splicing cassette (10) and space for accommodating the store (11) of the optical fibre (2) are provided in the second chamber of the slide-in unit (7), and
- in that there is provided in the partition (8) between the first and second chambers an opening through which the optical fibre (2) can be guided in the form of the store (11) laid in loops from the second fixing means (5) to the splicing cassette (10).

## Revendications

1. Appareil de la technique de l'information par voie optique pour emmagasiner des surlongueurs de conducteurs optiques, constitué d'une armoire (G) avec une paroi arrière (3) et d'au moins un tiroir (7) qui présente une paroi avant (12) et une extrémité arrière (9), qui s'insère dans une ouverture de l'armoire (G), qui peut s'extraire, d'une course d'extraction (a) déterminée, hors de cette armoire et qui est constitué d'une première chambre rectangulaire (6) pour recevoir au moins un conducteur optique (2), ainsi que d'une seconde chambre rectangulaire, séparée de la première par une cloison (8), pour recevoir une réserve (11) d'au moins un conducteur optique placé en boucles,
appareil caractérisé par le fait
- que sur la paroi arrière de l'armoire (G) sont prévus des premiers moyens de fixation (20) pour le conducteur optique (2),
- que dans la première chambre (6), à l'extrémité arrière (9) du tiroir (7), sont rapportés une douille de guidage (4), orientée dans la direction du mouvement du tiroir, pour le passage, à frottement faible, du conducteur optique (2) ainsi que des seconds moyens de fixation (5) pour le conducteur optique,
- que les premiers moyens de fixation (1) et la douille de guidage (4) sont rapportés dans une position, relativement l'un à l'autre, telle que le conducteur (2), fixé aux premiers moyens de fixation (1), peut, sans se croquer, passer, par la douille de guidage (4), dans la première chambre (6) du tiroir (7),
- que l'on choisit la distance entre la paroi avant (12) du tiroir (7) et la douille de guidage (4) ou les seconds moyens de fixation (5) ainsi que la position des seconds moyens de fixation (5) de façon qu'un conducteur optique (2), dont la longueur entre la douille de guidage (4) et les seconds moyens de fixation (5) est, le tiroir (7) étant fermé, supérieure au double de la course d'extraction (a), puisse se placer dans la première chambre (6) sous forme d'une boucle en forme de U dont le branches peuvent être définies par la douille de guidage (4) ou par les seconds moyens de fixation (5),
- que dans la seconde chambre du tiroir (7) sont prévus une cassette de raccordement (10) ainsi que l'espace nécessaire pour recevoir la réserve (11) du conducteur optique (2) et
- que dans la cloison (8) entre la première et la seconde chambres est prévue une ouverture par laquelle le conducteur optique (2) peut, sous forme de la réserve (11) placée en boucles, passer des seconds moyens de fixation (5) à la cassette de raccordement (10).
